# FASCICULE DE BREVET EUROPEEN

(11) **EP 1 237 941 B1**
(45) Date de publication et mention de la délivrance du brevet: **14.06.2006**
(21) Numéro de dépôt: 01984600.5
(22) Date de dépôt: 27.08.2001
(51) Int. Cl.: C08F 4/48, C08F 36/06, C08F 297/02

(54) **PROCEDE DE PREPARATION D'UN INITIATEUR DILITHIE**
VERFAHREN ZUR HERSTELLUNG EINES DILITHIUM INITIATORS
METHOD FOR PREPARING A DILITHIUM INITIATOR

(30) Priorité: 11.09.2000 FR 0011617
(43) Date de publication de la demande: 11.09.2002
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: ROBERT, Pierre, F-63170 Perignat Les Sarlieve (FR); FRADIN-COHAS, Corinne, F-63000 Clermont-Ferrand (FR)
(74) Mandataire: Hiebel, Robert
(86) Numéro de dépôt international: PCT/EP2001/009856
(87) Numéro de publication internationale: WO 2002/020623

(56) Documents cités:
- EP-A- 0 316 857
- US-A- 4 172 190
- US-A- 5 561 210
- US-A- 5 750 055

## Description

La présente invention concerne un procédé de préparation d'un initiateur dilithié utilisable en polymérisation anionique, un procédé de préparation par polymérisation anionique d'un élastomère diénique vivant qui est pourvu d'un groupe carbone-lithium à chacune de ses extrémités de chaîne, et un procédé de préparation d'un copolymère à trois blocs à partir dudit élastomère diénique vivant.

La préparation d'initiateurs de polymérisation dilithiés a été abondamment décrite dans la littérature. La principale difficulté qui se pose lors de cette préparation est d'obtenir des initiateurs effectivement difonctionnels, c'est-à-dire qui sont tels qu'ils permettent l'équi-réactivité des sites carbone-lithium lors de réactions de polymérisation anionique mettant en oeuvre ces initiateurs.

Les deux modes de préparation de tels initiateurs dilithiés qui ont été les plus étudiés à ce jour sont:
- le couplage d'anions radicaux.

On peut par exemple citer la préparation du 1,4-dilithiotétraphénylbutane, à partir d'un précurseur constitué de 1,1-diphényléthylène (L.J. Fetters et M. Morton, Macromolecules 2, 453, 1969).

Le principal inconvénient de ce premier mode de préparation réside dans la nécessité d'utiliser du lithium à l'état métallique, ce qui représente une difficulté lors d'une extrapolation à l'échelle industrielle. De plus, le précurseur utilisé présente un coût très élevé; et
- l'addition de composés monolithiés sur un composé di-insaturé.

On peut par exemple citer, à titre de composés di-insaturés, les composés portant deux motifs diphényléthylène, tels que le 1,3 bis(1-phényléthényl) benzène (L.H. Tung et G.Y.S. Lo, Macromolecules 27, 1680, 1994).

A ce titre, le document de brevet international WO-A-89/04843 divulgue un procédé de préparation d'un initiateur dilithié consistant à faire réagir, dans du cyclohexane, du butyl lithium secondaire avec du 1,3-bis(1-phényléthényl)benzène dans des quantités stoechiométriques. Pour faire en sorte que l'initiateur ainsi préparé présente un caractère difonctionnel lors de la polymérisation, il est à noter que l'on doit introduire ultérieurement une polyamine dans le milieu de polymérisation.

Un inconvénient majeur de ce second mode de préparation réside dans le manque de disponibilité des précurseurs pour une exploitation à l'échelle industrielle.

L'utilisation de précurseurs de type aromatique di-insaturé (tels que le divinylbenzène, ou encore le 1,3-diisopropénylbenzène) permet de pallier cet inconvénient.

Ainsi, la réaction entre le 1,3-diisopropénylbenzène et le butyl lithium secondaire a été largement étudiée. On peut citer deux exemples de mise en oeuvre de cette réaction:
- selon un premier exemple, R. P. FOSS et al. (R. P. Foss et al., Macromolecules 10, 287, 1977) ont notamment proposé un initiateur obtenu en présence de 1,3-diisopropénylbenzène, de butyl lithium secondaire et de 0,1 équivalent lithium de triéthylamine. Cet initiateur est obtenu sous forme d'oligo-isoprène α,w-dilithié, afin de le solubiliser en milieu non polaire. On a utilisé ledit initiateur pour la préparation de polymères obtenus par voie anionique, et on a conclu au comportement effectivement difonctionnel de cet initiateur sur la base des masses moléculaires moyennes en nombre et des distributions monomodales de masses moléculaires qui ont été obtenues pour ces polymères.

Cependant, comme cela apparaît dans le document publié par G. Gordon Cameron et G. M. Buchan (Polymer 20, 1129, 1979), postérieurement à ce document de R. P. FOSS, ces constats de masses moléculaires et de distributions de masses moléculaire n'attestent que d'une fonctionnalité moyenne pour les deux sites carbone-lithium de l'initiateur, et ces éléments de macrostructure ne constituent pas une condition suffisante pour définir l'équi-réactivité de ces sites lors de la polymérisation, c'est-à-dire la difonctionnalité effective de l'initiateur.

En effet, le caractère monomodal précité pour les distributions de masses moléculaires peut s'expliquer en faisant l'hypothèse que les cinétiques de polymérisation de chacune des espèces initiatrices présentes (i.e. composé monolithié résiduel, composé dilithié, composés polylithiés issus de l'oligomérisation du 1,3-düsopropénylbenzène) se compensent.
- Selon un second exemple de mise en oeuvre de la réaction entre le 1,3-diisopropénylbenzène et le butyl lithium secondaire, le document de brevet américain US-A-5 464 914 divulgue en plus l'ajout de 10 équivalents lithium de triéthylamine pour l'obtention d'un initiateur dilithié. Pour faire en sorte que l'initiateur ainsi préparé présente un caractère difonctionnel lors de la polymérisation, il est à noter que l'on doit introduire ultérieurement une polyamine dans le milieu de polymérisation.

En effet, la polarité apportée par la triéthylamine ne suffit pas pour dissocier les sites C-Li portés par la molécule d'initiateur, c'est-à-dire pour révéler le caractère difonctionnel de ce dernier, au sens de l'équi-réactivité précitée des sites en polymérisation.

Ph TEYSSIE et al. ont récemment mis au point la préparation d'un initiateur dilithié par réaction du 1,3-diisopropénylbenzène avec le tertiobutyl lithium, en quantités stoechiométriques et en présence d'1 équivalent lithium de triéthylamine et à -20° C (Ph. Teyssié et al., Macromolecules 29, 2738, 1996,), de telle manière que le 1,3-diisopropénylbenzène soit additionné goutte à goutte sur une solution tertiobutyl lithium/triéthylamine.

Cette utilisation du tertiobutyl lithium à la place du butyl lithium secondaire est censée pallier un inconvénient inhérent à l'utilisation du butyl lithium secondaire, qui réside dans la production d'oligomères en quantité importante. En effet, le tertiobutyl lithium étant plus réactif que le butyl lithium secondaire, on oriente ainsi préférentiellement la réaction du 1,3-diisopropénylbenzène avec le tertiobutyl lithium vers une addition du composé lithié sur chacune des deux insaturations portées par le diisopropénylbenzène.

La technique de chromatographie d'exclusion par la taille (technique « SEC ») a permis d'établir l'absence d'oligomères du 1,3-diisopropénylbenzène, et la technique de RMN ⁷Li a montré la consommation sensiblement totale du tertiobutyl lithium.

On notera également que la molécule 1,3-diisopropénylbenzène/ tertiobutyl lithium ainsi obtenue ne se comporte comme un initiateur difonctionnel lors de la polymérisation (équi-réactivité des sites carbone-lithium), qu'à la condition d'ajouter une quantité suffisante d'un composé polaire (tétrahydrofurane, par exemple).

Le document de brevet international WO-A-00/22004 divulgue un procédé de préparation d'un initiateur dilithié consistant à faire réagir le diisopropénylbenzène avec du diéthyléther, puis à ajouter le mélange ainsi obtenu à un alkyl lithium secondaire ou tertiaire. La réaction dudit mélange avec un alkyl lithium secondaire est effectuée à une température comprise entre 40° C et 50° C ou, avec un alkyl lithium tertiaire, à une température comprise entre 25° C et 50° C.

La demanderesse a découvert d'une manière surprenante que si l'on fait réagir, dans un solvant hydrocarboné aliphatique ou alicyclique, un premier réactif constitué d'un dialcényl benzène et un second réactif constitué de butyl lithium secondaire de telle manière que le rapport du nombre de moles de premier réactif sur le nombre de moles de second réactif soit sensiblement égal à 0,5, cela spécifiquement en présence d'une diamine,
on obtient ainsi un initiateur dilithié essentiellement constitué d'un bi-adduit résultant de l'addition d'une molécule de butyl lithium secondaire sur chacune des deux doubles liaisons portées par le dialcényl benzène, ledit initiateur étant effectivement difonctionnel, en ce sens que les sites carbone-lithium dont il est pourvu sont équi-réactifs lors d'une polymérisation anionique ultérieure.

A titre de solvant hydrocarboné aliphatique, on utilise par exemple le cyclohexane.

Concernant ledit premier réactif, on utilise de préférence à titre de dialcényl benzène le 1,3-diisopropénylbenzène.

Concernant ledit second réactif, on notera qu'un avantage essentiel de la présente invention est d'utiliser spécifiquement le butyl lithium secondaire, qui est un composé moins onéreux que le tertiobutyl lithium et qui se prête donc mieux à une extrapolation à l'échelle industrielle.

Concernant les diamines qui, selon l'invention, doivent être utilisées pour l'obtention dudit initiateur, on peut citer, à titre préférentiel, les diamines appartenant au groupe constitué par la tétraméthyléthylènediamine et la tétraéthyléthylènediamine. Ces deux diamines préférentielles constituent toutes deux des agents chélatants multidentades qui sont caractérisés par une structure chimique et une activité analogues.

Selon une autre caractéristique de l'invention, on adjoint en une seule fois le premier réactif au second réactif, puis on introduit la diamine sur un mélange réactionnel comprenant lesdits réactifs.

On notera que cette adjonction en une seule fois du premier réactif constitue un mode opératoire simplifié, par rapport à une adjonction en goutte à goutte.

Selon une caractéristique de l'invention, lorsqu'on utilise à titre de diamine la tétraméthyléthylènediamine, on fait réagir lesdits réactifs en présence d'une quantité de diamine qui peut varier de 0,5 à 1 équivalent lithium, et qui est avantageusement sensiblement égale à 1 équivalent lithium, et à une température qui peut varier de -20° C à 50° C.

On notera que l'utilisation de tétraméthyléthylènediamine constitué un mode préférentiel de réalisation de l'invention.

Selon une autre caractéristique de l'invention, lorsqu'on utilise à titre de diamine la tétraéthyléthylènediamine, on fait réagir lesdits réactifs en présence d'une quantité de diamine qui est sensiblement égale à 1 équivalent lithium, et à une température qui varie de -20° C à 50° C.

Un initiateur dilithié selon l'invention est obtenu en mettant en oeuvre les opérations précitées. Cet initiateur comprend un bi-adduit qui résulte de l'addition d'une molécule de butyl lithium secondaire sur chacune des deux doubles liaisons portées par le dialcényl benzène, et il est tel qu'il comprend ledit bi-adduit selon une fraction massique égale ou supérieure à 75 % et, de préférence, égale ou supérieure à 90 %.

En effet, les espèces oligomériques (oligomères du dialcényl benzène) sont avantageusement présentes dans l'initiateur selon une fraction massique totale qui est inférieure ou égale à 25 % et, de préférence, inférieure ou égale à 10 %, et les résidus desdits réactifs sont quant à eux avantageusement présents dans ledit initiateur selon une fraction massique inférieure à 2 % et, de préférence, inférieure à 1 %, ce qui confère à l'initiateur selon l'invention un degré de pureté élevé en bi-adduit.

Un procédé selon l'invention pour la préparation par polymérisation anionique d'un élastomère diénique vivant qui est pourvu d'un groupe carbone-lithium à chacune de ses extrémités de chaîne, ledit procédé consistant à faire réagir, dans un solvant hydrocarboné aliphatique ou alicyclique, au moins un monomère diène conjugué avec un initiateur dilithié, est tel qu'il consiste à utiliser à titre d'initiateur dilithié un initiateur obtenu par le procédé de l'invention, pour que les groupes lithium dudit initiateur soient équi-réactifs lors de la polymérisation.

Par élastomère diénique, on entend de manière connue un élastomère issu au moins en partie (i.e. un homopolymère ou un copolymère) de monomères diènes (monomères porteurs de deux doubles liaisons carbone-carbone, conjuguées ou non).

De préférence, l'élastomère diénique préparé selon le procédé de l'invention appartient à la catégorie des élastomères diéniques "essentiellement insaturés", c'est-à-dire qui sont issus au moins en partie de monomères diènes conjugués, ayant un taux de motifs ou unités d'origine diénique (diènes conjugués) qui est supérieur à 15 % (% en moles).

Un tel élastomère diénique « essentiellement insaturé » peut être constitué de tout homopolymère obtenu par polymérisation d'un monomère diène conjugué ayant de 4 à 12 atomes de carbone, ou de tout copolymère obtenu par copolymérisation d'un ou plusieurs diènes conjugués entre eux ou avec un ou plusieurs composés vinyle aromatique ayant de 8 à 20 atomes de carbone.

A titre encore plus préférentiel, l'élastomère diénique préparé selon le procédé de l'invention appartient à la catégorie des élastomères diéniques "fortement insaturés", c'est-à-dire ayant un taux de motifs d'origine diénique (diènes conjugués) qui est supérieur à 50%.

A titre de diènes conjugués conviennent notamment le butadiène-1,3, le 2-méthyl-1,3-butadiène, les 2,3-di(alkyle en C1 à C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

De manière particulièrement préférentielle, l'élastomère diénique conforme à l'invention est choisi dans le groupe des élastomères diéniques fortement insaturés constitué par les polybutadiènes (BR), les polyisoprènes (IR) ou du caoutchouc naturel (NR), les copolymères de butadiène-styrène (SBR), les copolymères de butadiène-isoprène (BIR), les copolymères d'isoprène-styrène (SIR), les copolymères de butadiène-styrène-isoprène (SBIR) ou un mélange de deux ou plus de ces composés.

A titre de solvant de polymérisation aliphatique, on peut par exemple utiliser le cyclohexane ou encore le méthylcyclohexane.

La réaction de polymérisation peut être effectuée en présence ou non d'un agent polaire de type éther, par exemple le tétrahydrofurane, ou de type amine, par exemple la tétraméthyléthylènediamine.

Cette réaction peut être également effectuée en présence d'agents randomisants, tels que des alcoolates de sodium.

Quant à la température de polymérisation, elle peut généralement varier de 0° C à 90° C, et préférentiellement de 20° C à 70° C.

Si l'élastomère diénique à préparer est un polybutadiène, le procédé selon l'invention est tel qu'il consiste à pourvoir chacune des extrémités de chaîne du polybutadiène d'un groupe butadiényl-lithium.

On notera que les élastomères diéniques vivants obtenus par ce procédé de l'invention peuvent être ultérieurement fonctionnalisés, par l'intermédiaire du groupe carbone-lithium qu'ils comportent à chaque extrémité de chaîne, de sorte à conduire à l'obtention de polymères effectivement difonctionnels.

On notera également que ces polymères vivants ainsi obtenus peut être utilisés pour une polymérisation ultérieure, par exemple une polymérisation séquencée ou une réaction de greffage, de sorte à conduire à l'obtention de copolymères triblocs dont le bloc central est constitué dudit élastomère diénique et dont les blocs terminaux sont identiques.

A titre d'exemple, dans le cas d'un polymère vivant constitué de polybutadiène, on peut par exemple préparer de cette manière un copolymère styrène/ butadiène/ styrène (SBS) par greffage avec un polymère constitué de polystyrène. Et dans le cas d'un polymère vivant constitué de polyisoprène, on peut par exemple préparer de cette manière un copolymère styrène/ isoprène/ styrène (SIS) par un greffage analogue.

Les caractéristiques précitées de la présente invention, ainsi que d'autres, seront mieux comprises à la lecture de la description suivante de plusieurs exemples de réalisation de l'invention.

### 1/ EXEMPLES DE PRFPARATION D'INITIATEURS SELON L'INVENTION:

Dans les exemples qui suivent, on a utilisé, à titre de premier et second réactifs, respectivement le 1,3-diisopropénylbenzène (en abrégé m-DIB par la suite) et le butyl lithium secondaire (en abrégé sBuLi).

On a fait réagir ces réactifs sous atmosphère inerte, en flacon capsulé ou en réacteur de 10 litres équipé de moyens d'agitation mécanique.

Les diamines utilisées, la tétraméthyléthylènediamine (TMED) et la tétraéthyléthylènediamine (TEED) ont été distillées avant utilisation.

Tous les initiateurs obtenus ont été conservés à basse température (environ -20° C). Dans ces conditions, ils peuvent être stockés plusieurs mois sans perte d'activité.

### EXEMPLE 1:

### Préparation d'un initiateur A par réaction entre le m-DIB et le sBuLi à -20° C, en présence d'1 équivalent lithium de tétraméthyléthylènediamine (TMED).

Dans un flacon capsulé contenant 20 ml d'heptane désaéré, on introduit 14,3 ml d'une solution 1,425 mol/l de sBuLi dans le cyclohexane. Le milieu réactionnel est porté à -50° C. A cette température, on introduit 1,7 ml de m-DIB. Le milieu est maintenu sous agitation magnétique pendant 10 minutes, puis on introduit 3 ml de tétraméthyléthylènediamine. Le démarrage de la réaction à l'addition de la diamine se traduit par une montée de la température à -20° C. Le milieu réactionnel est ensuite maintenu pendant 5 heures à cette température.

Le titre de la solution est mesuré par dosage Gilman. (article J. Am. Chem. Soc. 66, 1515, 1944). On obtient un titre de 0,52 mol/1, ce qui correspond au titre recherché.

### EXEMPLE 2:

### Préparation d'un initiateur B par réaction entre le m-DIB et le sBuLi à -20° C, en présence de 0,5 équivalent lithium de tétraméthyléthylènediamine (TMED).

Dans un flacon capsulé contenant 45 ml d'heptane désaéré, on introduit 28,3 ml d'une solution 1,415 mol/l de sBuLi dans le cyclohexane. Le milieu réactionnel est porté à -50° C. A cette température, on introduit 3,4 ml de m-DIB. Le milieu est maintenu sous agitation magnétique pendant 10 minutes, puis on introduit 3 ml de tétraméthyléthylènediamine. Le démarrage de la réaction à l'addition de la diamine se traduit par une montée de la température à -20° C. Le milieu réactionnel est ensuite maintenu pendant 1 heure à cette température.

Le milieu réactionnel est ensuite laissé au repos pendant 12 heures au congélateur, à une température avoisinant -20° C.

Le titre de la solution est mesuré par dosage Gilman (article J. Am. Chem. Soc. 66, 1515, 1944). On obtient un titre de 0,5 mol/l, ce qui correspond au titre recherché.

### EXEMPLE 3:

### Préparation d'un initiateur C par réaction entre le m-DIB et le sBuLi à 50° C, en présence d'1 équivalent lithium de tétraméthyléthylènediamine (TMED).

Dans un flacon capsulé contenant 21 ml d'heptane désaéré, on introduit 14,3 ml d'une solution 1,425 mole/l de sBuLi dans le cyclohexane. Le milieu réactionnel est porté à 20° C. A cette température, on introduit 1,7 ml de m-DIB. Le milieu est maintenu sous agitation magnétique pendant 10 minutes, puis on introduit 3 ml de tétraméthyléthylènediamine. Le démarrage de la réaction à l'addition de la diamine se traduit par une montée de la température à 50° C. Le milieu réactionnel est ensuite maintenu pendant 5 heures à cette température.

Le titre de la solution est mesuré par dosage Gilman (article J. Am. Chem. Soc. 66, 1515, 1944). On obtient un titre de 0,53 mol/l, pour 0,51 mol/l recherché.

### EXEMPLE 4:

### Préparation d'un initiateur D par réaction entre le m-DIB et le sBuLi à 50°C, en présence de 0,5 équivalent lithium de tétraméthyléthylènediamine (TMED).

La synthèse est effectuée dans un réacteur de 101 1 muni d'une agitation mécanique.

Dans le réacteur contenant 4,31 d'heptane désaéré, on introduit 2,7 1 d'une solution de sBuLi à 1,38 mol/l dans le cyclohexane, puis 318 ml de m-DIB. La température du milieu réactionnel est mesurée à 28° C, le milieu est maintenu sous agitation pendant 15 minutes, puis on introduit 284 ml de tétraméthyléthylènediamine. L'introduction de la diamine se traduit par une élévation de la température, et le milieu réactionnel atteint rapidement 50° C. Cette température est maintenue pendant les 5 heures de réaction.

Le titre de la solution est mesuré par dosage Gilman (article J. Am. Chem. Soc. 66, 1515, 1944). On obtient un titre de 0,47 mol/l, pour 0,49 mol/l recherché.

### EXEMPLE 5:

### Préparation d'un initiateur E par réaction entre le m-DIB et le sBuLi à température ambiante, en présence de 0,5 équivalent lithium de tétraméthyléthylènediamine (TMED).

Dans un flacon capsulé contenant 20 ml d'héptane désaéré, on introduit 14,3 ml d'une solution de sBuLi à 1,425 mol/l dans le cyclohexane, puis 1,7 ml de m-DIB. La température du milieu réactionnel est mesurée à 23° C, le milieu est maintenu sous agitation magnétique pendant 10 minutes, puis on introduit 1,5 ml de tétraméthyléthylènediamine. L'introduction de la diamine se traduit par une élévation brutale de la température à 54° C, pour redescendre progressivement et se stabiliser au bout d'une heure environ à 26° C. Au total, on laisse réagir le milieu réactionnel pendant 5 heures.

Le titre de la solution est mesuré par dosage Gilman (article J. Am. Chem. Soc. 66, 1515, 1944). On obtient un titre de 0,53 mol/l, pour 0,54 mol/l recherché.

### EXEMPLE 6:

### Préparation d'un initiateur F par réaction entre le m-DIB et le sBuLi à 50° C, en présence de 0,5 équivalent lithium de tétraéthyléthylènediamine (TEED).

Dans un flacon capsulé contenant 21 ml d'heptane désaéré, on introduit 14,3 ml d'une solution 1,425 mol/l de sBuLi dans le cyclohexane. Le milieu réactionnel est porté à -50° C. A cette température, on introduit 1,7 ml de m-DIB. Le milieu est maintenu sous agitation magnétique pendant 10 minutes, puis on introduit 4,2 ml de tétraéthyléthylènediamine. Le démarrage de la réaction à l'addition de la diamine se traduit par une montée de la température à -20° C. Le milieu réactionnel est ensuite maintenu pendant 1 heure à cette température.

Le milieu réactionnel est ensuite laissé en repos pendant 12 heures au congélateur, à une température avoisinant -20° C.

Le titre de la solution est mesuré par dosage Gilman (article J. Am. Chem. Soc. 66, 1515, 1944). On obtient un titre de 0,5 mol/1, pour 0,49 mol/l recherché.

### 2/ CARACTERISATION DES INITIATEURS DILITHIES AINSI PRFPARES:

### a) Recherche de sBuli résiduel:

La mise en évidence de sBuLi résiduel est effectuée après dérivatisation avec la 4,4-benzophénone (en abrégé Ph₂CO ci-après). On recherche l'adduit sBuLi/ Ph₂CO.

On met en oeuvre la réaction de dérivatisation de la manière suivante.

Un échantillon du milieu réactionnel à caractériser (comprenant le bi-adduit m-DIB/ 2 sBuLi) est dilué au 1/10^{ème} (volume/ volume) dans du toluène désaéré, puis est mis à réagir 1 heure à 60° C avec 1,5 équivalent lithium de Ph₂CO. Le milieu est ensuite protoné par addition d'un large excès de méthanol.

Le mélange réactionnel est ensuite caractérisé par chromatographie en phase gazeuse.

L'appareillage utilisé est un chromatographe commercialisé par HEWLETT PACKARD sous la dénomination « 5890 ».

### b) Recherche de m-DIB résiduel:

Un échantillon de ce milieu réactionnel est protoné par addition d'un large excès de méthanol puis analysé par chromatographie en phase gazeuse.

L'appareillage utilisé est un chromatographe commercialisé par HEWLETT PACKARD sous la dénomination « 6890 ».

### c) Mise en évidence de la formation en quantité majoritaire du bi-adduit (DIB/2 sBuLi):

Un échantillon du milieu réactionnel est protoné par addition d'un large excès de méthanol puis analysé par chromatographie en phase gazeuse couplée à la spectrométrie de masse (CPG / SM) en utilisant l'impact électronique comme mode d'ionisation (IE), ainsi que par introduction directe de l'échantillon dans la source d'un spectromètre de masse, en utilisant les deux modes d'ionisation impact électronique (IE) et ionisation chimique (IC) par le gaz ammoniac, de sorte à mettre en évidence les espèces oligomériques formées par polymérisation du m-DIB.

L'appareillage utilisé pour l'analyse CPG / SM est un chromatographe commercialisé par HEWLETT PACKARD sous la dénomination « MSD 5973 »; les analyses par introduction directe sont effectuées sur un spectromètre de masse commercialisé par NERMAG sous la dénomination « R10 10-C ».

Ces analysés ont montré que le composé formé en quantité majoritaire est le bi-adduit DIB / 2 sBuLi, de masse moléculaire égale à 274 g/mol.

### d) Ouantification des espèces oligomériques:

L'initiateur est caractérisé par la technique de chromatographie d'exclusion par la taille (appelée technique « SEC »).

On prépare l'initiateur à analyser de la manière suivante.

Un échantillon du milieu réactionnel précité est dilué au 1/5 ^{ème} (volume/ volume) dans du toluène désaéré puis protoné par addition d'un large excès de méthanol.

L'échantillon est ensuite lavé à l'eau jusqu'à neutralité puis le solvant est éliminé par entraînement à l'azote.

On solubilise l'échantillon d'initiateur à analyser dans du tétrahydrofurane, à une concentration d'environ 1 g/l.

L'appareillage utilisé est un chromatographe WATERS de modèle « 150C ». Le solvant d'élution est le tétrahydrofurane, le débit d'1 ml/min., la température du système de 35° C et la durée d'analyse de 40 min. le volume injecté de l'échantillon d'initiateur est de 100 µl. Le détecteur est un réfractomètre différentiel WATERS de modèle « R401 » et le logiciel d'acquisition et traitement des données chromatographiques est le logiciel MILLENIUM commercialisé par WATERS (version 2.10).

L'étalonnage de l'appareil de mesure est réalisé à partir d'étalons de polystyrène.

On calcule le pourcentage d'oligomères formés en faisant le rapport de l'aire de la surface des pics correspondants aux différentes espèces oligomériques sur l'aire totale de la surface située sous la courbe de distribution des masses moléculaires. Les surfaces sont fournies par le logiciel d'exploitation des données chromatographiques.

### e) Résultats obtenus :

Le tableau ci-après rend compte de l'ensemble des résultats obtenus pour la caractérisation desdits initiateurs A à F.

Pour chacun des initiateurs, les taux de sBuLi et de m-DIB résiduels sont exprimés en pourcentages des quantités correspondantes qui ont été introduites pour la réaction. Quant aux taux d'espèces oligomériques issues du m-DIB, ils sont exprimés en pourcentages massiques.

| **Initiateur** | **sBuLi résiduel** | **DIB résiduel** | **espèces oligomériques (analyse SEC)** |
|---|---|---|---|
| A | 0,95 % | 0,22 % | ~7% |
| B | 1,4% | <0,04% | ~10% |
| C | 0,08 % | <0,02 % | ~5% |
| D | 0,13% | <0,02 % | ~18% |
| E | 1,1 % | 0,16 % | ~13% |
| F | <0,014% | <0,02% | ~25% |

A titre illustratif, sont représentées aux Figs. 1 et 2 les courbes de distribution des masses moléculaires pour les initiateurs B et F dont les synthèses sont décrites respectivement dans les exemples 2 et 6 du paragraphe 1/.

Le tableau de résultats précité et ces graphiques montrent que la réaction entre le m-DIB et le sBuLi, est effectivement orientée vers la formation du biadduit (m-DIB / 2 sBuLi). En effet, les taux de sBuLi et de m-DIB résiduels sont très faibles (inférieurs pour la plupart à 1 % de la quantité introduite) et la formation d'oligomères du m-DIB est limitée à une fraction massique allant de 5 % à 25 % selon les exemples.

Par conséquent, les initiateurs dilithiés obtenus par un procédé selon l'invention sont tels qu'ils sont quasi-exclusivement constitués dudit bi-adduit.

### 3/ EXEMPLES COMPARATIFS DE PREPARATION D'INITIATEURS NON CONFORMES A L'INVENTION ET LEUR CARACTERISATION:

### EXEMPLE 7:

### Préparation d'un initiateur G par réaction entre le m-DIB et le butyl lithium linéaire (n-BuLi) à -20° C, en présence d'1 équivalent lithium de tétraméthyléthylènediamine (TMED).

Cet exemple est caractérisé par les mêmes conditions de préparation qu'à l'exemple 1 précité du paragraphe 1/, à ceci près que l'on a remplacé le butyl lithium secondaire par du butyl lithium linéaire.

Dans un flacon capsulé contenant 20 ml d'heptane désaéré, on introduit 7,85 ml d'une solution 2,6 mol/l de n-BuLi dans le cyclohexane. Le milieu réactionnel est porté à -50° C. A cette température, on introduit 1,7 ml de m-DIB. Le milieu est maintenu sous agitation magnétique pendant 10 minutes, puis on introduit 3 ml de TMED. Le démarrage de la réaction à l'addition de la diamine se traduit par une montée de la température à -20° C. Le milieu réactionnel est ensuite maintenu pendant 5 heures à cette température.

On obtient un milieu hétérogène avec présence d'un précipité.

L'analyse par chromatographie d'exclusion par la taille (SEC) révèle la présence d'espèces insolubles. La proportion de biadduit est évaluée à moins de 5 % en masse.

Par conséquent, cet exemple montre que le seul remplacement du butyl lithium secondaire par son homologue linéaire, dans le procédé de préparation d'un initiateur selon l'invention, oriente la réaction entre le m-DIB et le n-BuLi vers la formation d'espèces oligomériques qui sont insolubles dans le milieu réactionnel. La réactivité du n-BuLi est insuffisante pour conduire à la formation du biadduit, par addition sur les insaturations de la molécule de m-DIB.

### EXEMPLE 8:

### Préparation d'un initiateur H par réaction entre le m-DIB et le butyl lithium secondaire (sBuLi) à -20° C, en présence d'1 équivalent lithium de triéthylamine.

Cet exemple est caractérisé par les mêmes conditions de préparation qu'à l'exemple 1 précité du paragraphe 1/, à ceci près que l'on a remplacé la tétraméthyléthylènediamine (TMED) par de la triéthylamine, laquelle a été distillée avant utilisation.

Dans un flacon capsulé contenant 20 ml d'heptane désaéré, on introduit 14,3 ml d'une solution 1,425 mol/l de sBuLi dans le cyclohexane. Le milieu réactionnel est porté à -50° C. A cette température, on introduit 1,7 ml de m-DIB. Le milieu est maintenu sous agitation magnétique pendant 10 minutes, puis on introduit 2,84 ml de triéthylamine. Le démarrage de la réaction à l'addition de l'amine se traduit par une montée de la température à -20° C. Le milieu réactionnel est ensuite maintenu pendant 5 heures à cette température.

L'analyse par chromatographie d'exclusion par la taille (SEC) révèle la présence d'oligomères en quantité importante (de l'ordre de 50 % en masse).

Par conséquent, cet exemple montre que le seul remplacement de la TMED par la triéthylamine, dans le procédé de préparation d'un initiateur selon l'invention, oriente la réaction entre le m-DIB et le sBuLi vers la formation d'oligomères en quantité importante, ce qui réduit considérablement la pureté en biadduit.

### 4/ EXEMPLES DE PREPARATION DE POLYBUTADIENES VIVANTS AU MOYEN D'INITIATEURS SELON L'INVENTION:

On a préparé des polybutadiènes de basse masse moléculaire (50 000 g/mol) comprenant une liaison butadiényl-lithium à chacune des deux extrémités de la chaîne polymérique.

Les exemples qui suivent se rapportent respectivement à l'utilisation des initiateurs A à F qui ont été préparés selon les exemples 1 à 6 du paragraphe 1/.

On a réalisé les réactions de polymérisation sous atmosphère inerte, en flacon capsulé, et en mettant à chaque fois en oeuvre le protocole expérimental suivant.

Dans 45 ml de cyclohexane désaéré, on introduit 5 g de butadiène. Après compensation des impuretés apportées par le solvant et le monomère à l'aide n-butyl lithium, on introduit un volume d'initiateur dilithié correspondant à 200 µmol de liaisons carbone-lithium. La polymérisation s'effectue à 60° C. Après conversion totale du monomère, on introduit 1,2 ml d'une solution 0,25 mol/l de chlorotriméthylsilane (rapport Si/Li = 1,5) dans le cyclohexane. Au bout de 30 minutes, le polymère est protoné par addition de 2 ml de solution 2 mol/l de méthanol dans le toluène. On antioxyde le polymère par addition de 2,2'-méthylène bis-4 méthyl-6 tertiobutylphénol (1 g pour 100 g de monomère). L'élastomère est ensuite séché à 50° C sous pression réduite.

### 5/ CARACTERISATION DES POLYBUTADIENES OBTENUS:

### a) Distribution des masses moléculaires (DDM):

On a procédé à une caractérisation des polymères obtenus par la technique de chromatographie d'exclusion par la taille (technique SEC). Cette technique consiste à séparer physiquement les macromolécules suivant leur taille à l'état gonflé, sur des colonnes remplies d'une phase stationnaire. On sépare les macromolécules par leur volume hydrodynamique, les plus volumineuses étant éluées en premier.

Sans être une méthode absolue, la technique SEC, qui utilise un réfractomètre différentiel, constitue un outil adapté pour appréhender la distribution des masse moléculaires d'un polymère. A partir de produits étalons dont les caractéristiques sont décrites dans le document de brevet européen EP-A-692 493, on détermine les masses moléculaires moyennes en nombre (Mn) et en poids (Mw) comme décrit dans ledit document, et on calcule l'indice de polydispersité (Ip = Mw/Mn).

On solubilise au préalable l'échantillon à analyser dans du tétrahydrofurane, à une concentration d'environ 1 g/l.

L'appareillage utilisé est un chromatographe « WATERS » de modèle « 150C ». Le solvant d'élution est le tétrahydrofurane, le débit d' 1 ml/min., la température du système de 35° C et la durée d'analyse de 30 min.

Le volume injecté de l'échantillon d'initiateur dilithié est de 100 µl.

Le détecteur est un réfractomètre différentiel « WATERS » de modèle « R401 » et le logiciel d'exploitation des données chromatographiques est le système commercialisé sous la dénomination « WATERS MILLENIUM » (version 2.10).

### b) Masse moléculaire en nombre (Mn) déterminée par osmométrie:

L'appareillage utilisé est un osmomètre à membrane semi-perméable « GONOTEC » de modèle « Osmomat 090 ». Le polymère à analyser est mis en solution dans le toluène, à une concentration d'environ 10 g/l. La mesure est effectuée à 50° C.

### c) Mise en évidence de l'activité de chacun des deux sites C-Ii portés par la molécule d'initiateur lors de la polymérisation du butadiène:

Pour chacun desdits initiateurs A à F, on a mis en évidence par RMN¹H l'absence de site lithié non actif lors de la polymérisation du butadiène, après fonctionnalisation des extrémités de la chaîne avec le chlorotriméthylsilane (ClSiMe₃), qui est un réactif connu pour réagir avec les groupes carbone-lithium.

En effet, si une seule extrémité de chaîne a été initiée, il existe finalement deux fonctions de nature différente aux deux extrémités de la chaîne de polymère:
une première fonction butadiényl-Li et une seconde fonction correspondant au site lithié de l'initiateur (m-DIB-Li).

La mise en évidence de l'activité des sites C-li repose sur le fait que, après réaction avec ClSiMe₃, les protons des groupes méthyle résonnent à des fréquences différentes, selon que leur environnement est de type butadiényle ou de type m-DIB.

On prépare l'échantillon de polymère à analyser de la manière suivante.

On coagule dans du méthanol le polymère obtenu après réaction avec ClSiMe₃, protoné au méthanol et antioxydé par ajout de 2,2'-méthylène bis-4. méthyl-6 tertiobutylphénol, puis on le remet par deux fois en solution dans le toluène et dans le méthanol pour sa coagulation. On sèche ensuite le polymère à 50° C sous pression réduite et balayage d'azote.

On procède à l'analyse RMN¹H du polymère de la manière suivante.

On solubilise dans du sulfure de carbone un échantillon du polymère ainsi traité. On utilise pour l'analyse du signal RMN¹H un spectromètre commercialisé sous la dénomination « BRUKER AC200 ».

Les trois protons méthyliques du motif 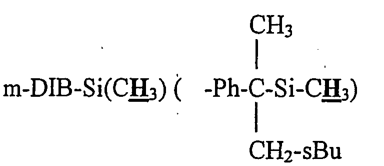 se caractérisent par un massif vers -0,2 ppm. Les trois protons méthyliques du motif butadiényl-Si(C**H**₃) se caractérisent par un massif entre 0 et -0,1 ppm.

### d) Résultats obtenus:

Le tableau ci-après rend compte de l'ensemble des résultats obtenus pour la caractérisation des polybutadiènes respectivement préparés au moyen desdits initiateurs A à F.

Pour chacun des polybutadiènes obtenus, sont indiqués les masses moléculaires moyennes en nombre Mn (g/mol) et l'indice de polydispersité Ip (tous deux déterminés par la technique SEC), la masse moléculaire moyenne en nombre Mn ₒₛₘₒ (mesurée par osmométrie), ainsi que le taux massique d'enchaînements vinyliques (déterminé par RMN¹H, en %).

| **Polybutadiènes** | **Initiateur** | **Mn** | **Ip** | **Mn**_{**osmo**} | **Taux** |
|---|---|---|---|---|---|
| | | **(g/mol)** | | **(g/mol)** | **enchaînements** |
| | | **(technique SEC)** | | **(osmométrie)** | **vinyliques (%)** |
| 1 | A | 42208 | 1,07 | 50000 | 68 |
| 2 | B | 43 118 | 1,07 | 50000 | 53 |
| 3 | C | 42405 | 1,1 | 50000 | 68 |
| 4 | D | 43256 | 1,09 | 50000 | 53 |
| 5 | E | 43 897 | 1,06 | 52000 | 52 |
| 6 | F | 45262 | 1,08 | 55000 | 44 |

Pour chacun des polybutadiènes 1 à 6, on a repéré les motifs fonctionnalisés -Si(Me)₃ entre 0 et -0,1 ppm, ce qui correspond aux protons du motif butadiényl-Si(C**H**₃). Aucun signal n'est détecté dans la zone de -0,2 ppm.

Pour chacun de ces polybutadiènes 1 à 6, les intégrations respectives des protons aromatiques (massif centré à 7 ppm) et du signal correspondant au motif -Si(CH₃)₂ (massif entre 0 et -0,1 ppm) sont bien dans le rapport 0,5 attendu.

A titre illustratif, ôn a représenté ci-après la courbe de distribution des masses moléculaires pour le polybutadiène 3 synthétisé à partir de l'initiateur C.

En conclusion, on notera que chacun des polymères synthétisés possède une masse moléculaire en nombre Mnₒₛₘₒ mesurée par osmométrie qui est en accord avec la valeur théorique. De plus, la distribution des masses moléculaires est monomodale et étroite (Ip < 1,1).

On notera également que les deux sites présents sur le biadduit m-DIB/ 2 sBuLi sont également actifs en polymérisation. En effet, l'analyse RMN¹H de chacun des polymères après fonctionnalisation des extrémités de chaîne, par réaction avec le chlorotriméthylsilane, a montré que ces sites sont transformés en butadiényl-Li.

En résumé, chacun des initiateurs A à F selon l'invention se comporte comme un initiateur effectivement difonctionnel, au sens de l'équi-réactivité des sites carbone-lithium portés par la molécule.

### 6/ EXEMPLES DE PREPARATION DE COPOLYMERES TRIBLOCS STYRENE/ BUTADIENE/ STYRENE :

L'initiateur D, dont les conditions de synthèse sont décrites dans l'exemple 4 du paragraphe 1/ ci-dessus, a été utilisé pour la synthèse d'un copolymère tribloc styrène/butadiène/ styrène (SBS), qui possède un bloc polystyrène à chacune des extrémités de chaîne.

A titre de comparaison, on a également synthétisé le copolymère dibloc butadiène/styrène de même masse moléculaire, en utilisant du n-butyllithium pour l'initiation.

On a réalisé les réactions de polymérisation sous atmosphère inerte, dans un réacteur de 10 litres muni d'une agitation mécanique.

### a) Synthèse du copolymère tribloc :

Dans 4 litres de cyclohexane désaéré, on introduit 201 g de butadiène. Après compensation des impuretés apportées par le solvant et le monomère à l'aide du n-butyllithium, on introduit un volume d'initiateur correspondant à 4 mmol de liaisons carbone-lithium. La polymérisation du bloc polybutadiène s'effectue à 60° C. Après conversion de la totalité du butadiène, on introduit 99 g de styrène que l'on polymérise à 60° C pendant 80 minutes. Le copolymère est ensuite protoné par addition d'un large excès de méthanol en solution dans le toluène, antioxydé par addition de 2,2'-méthylène bis-4méthyl-6 tertbutylphénol (1 g pour 100 g de monomère), puis récupéré par stripping à la vapeur d'eau et séché en étuve sous pression réduite à 60° C.

Le polymère obtenu présente les caractéristiques suivantes :

| | |
|---|---|
| Mn (g/mol) déterminée par osmométrie : | 150 000 g/mol |
| Indice de polydispersité | 1,12 |
| Taux d'enchaînements vinyliques (% masse) | 40 |
| Taux de styrène incorporé (% masse) | 32. |

### b) Synthèse du copolymère dibloc:

Dans 4 litres de cyclohexane désaéré, on introduit 186 g de butadiène et 2,4 ml d'une solution 0,5 M de tétraméthyléthylènediamine dans le cyclohexane. Après compensation des impuretés apportées par le solvant et le monomère à l'aide du n-butyllithium, on introduit 3,7 ml d'une solution de n-butyllithium à 0,5 mol/l dans le cyclohexane. La polymérisation du bloc polybutadiène s'effectue à 60° C. Après conversion de la totalité du butadiène, on introduit 114 g de styrène que l'on polymérise à 60° C pendant 60 minutes. Le copolymère est ensuite protoné par addition d'un large excès de méthanol en solution dans le toluène, antioxydé par addition de 2,2'-méthylène bis-4méthyl-6 tertbutylphénol (1 g pour 100 g de monomère), puis récupéré par stripping à la vapeur d'eau et séché en étuve sous pression réduite à 60° C. Le polymère obtenu présente les caractéristiques suivantes :

| | |
|---|---|
| Mn (g/mol) déterminée par osmométrie : | 145 000 g/mol |
| Indice de polydispersité | 1,08 |
| Taux d'enchaînements vinyliques (% masse) | 39 |
| Taux de styrène incorporé (% masse) | 33. |

### 7/ CARACTERISATION MECANIQUE DE CES COPOLYMERES STYRENE/ BUTADIENE/ STYRENE A BLOCS :

Le tableau ci-après rend compte des propriétés de contrainte/ allongement des copolymères SBS à blocs non réticulés, dont la synthèse est décrite au paragraphe 6/. Pour chacun de ces copolymères, sont indiqués la contrainte apparente à la rupture (MPa), la déformation à la rupture (en %), ainsi que les modules sécants MS à 10 %, 50 %, 100 % et 300 % de déformation (MPa).

Les mesures ont été réalisées sur une machine INSTRON 4501 à 23° C, à une vitesse de traction de 1m/min., sur des éprouvettes de type « haltère » prélevées dans des plaques de polymère de 2,5 mm d'épaisseur, moulées pendant 10 min. à 110° C puis refroidies sous presse pendant une vingtaine d'heures.

| | **TRIBLOC** | **DIBLOC** |
|---|---|---|
| **Contrainte rupture (MPa)** | 8,29 | 0,68 |
| **Déformation rupture (%)** | 745,4 | 52,5 |
| **MS 10 %** | 19,31 | 1,63 |
| **MS 50 %** | 4,5 | 1,32 |
| **MS 100 %** | 2,13 | 0,54 |
| **MS 300 %** | 0,953 | 0,001. |

Le copolymère obtenu à partir de l'initiateur selon la présente invention possède des modules nettement plus élevés que ceux du copolymère initié au n-butyllithium. Les niveaux de contrainte et d'allongement rupture sont également très supérieurs.

En conclusion, il convient d'insister sur la structure tribloc du copolymère formé à partir de l'initiateur selon l'invention ce qui atteste, comme mentionné dans les exemples précédents, du caractère parfaitement difonctionnel dudit initiateur au sens de l'équi-réactivité des sites carbone-lithium portés par la molécule.

## Revendications

1. Procédé de préparation d'un initiateur dilithié utilisable en polymérisation anionique, ledit procédé consistant à faire réagir dans un solvant hydrocarboné aliphatique ou alicyclique un premier réactif constitué d'un dialcényl benzène et un second réactif constitué de butyl lithium secondaire, de telle manière que le rapport du nombre de moles de premier réactif sur le nombre de moles de second réactif soit sensiblement égal à 0,5,
**caractérisé en ce qu'**il consiste à faire réagir lesdits réactifs en présence d'une diamine, pour que l'initiateur obtenu soit essentiellement constitué d'un bi-adduit résultant de l'addition d'une molécule de butyl lithium secondaire sur chacune des deux doubles liaisons portées par ledit dialcényl benzène.

2. Procédé de préparation d'un initiateur dilithié selon la revendication 1, **caractérisé en ce qu'**il consiste à introduire ladite diamine sur un mélange réactionnel comprenant lesdits réactifs.

3. Procédé de préparation d'un initiateur dilithié selon la revendication 1 ou 2, **caractérisé en ce qu'**il consiste à adjoindre en une seule fois ledit premier réactif audit second réactif.

4. Procédé de préparation d'un initiateur dilithié selon une des revendications 1 à 3, **caractérisé en ce qu'**il consiste à faire réagir lesdits réactifs en présence d'une quantité de diamine qui varie de 0,5 à 1 équivalent lithium.

5. Procédé de préparation d'un initiateur dilithié selon la revendication 4, **caractérisé en ce qu'**il consiste à faire réagir lesdits réactifs en présence d'une quantité de diamine qui est sensiblement égale à 1 équivalent lithium.

6. Procédé de préparation d'un initiateur dilithié selon une des revendications 1 à 5, **caractérisé en ce qu'**il consiste à utiliser, à titre de diamine, une diamine appartenant au groupe constitué par la tétraméthyléthylènediamine et la tétraéthyléthylènediamine.

7. Procédé de préparation d'un initiateur dilithié selon la revendication 6, **caractérisé en ce qu'**il consiste à faire réagir lesdits réactifs en présence de tétraméthyléthylènediamine.

8. Procédé de préparation d'un initiateur dilithié selon la revendication 7, **caractérisé en ce qu'**il consiste à faire réagir lesdits réactifs en présence de tétraméthyléthylènediamine à une température qui varie de -20° C à 50° C.

9. Procédé de préparation d'un initiateur dilithié selon la revendication 6, **caractérisé en ce qu'**il consiste à faire réagir lesdits réactifs en présence de tétraéthyléthylènediamine.

10. Procédé de préparation d'un initiateur dilithié selon les revendications 5 et 9, **caractérisé en ce qu'**il consiste à faire réagir lesdits réactifs en présence de tétraéthyléthylènediamine à une température qui varie de -20° C à 50° C.

## Claims

1. A process for the preparation of a dilithiated initiator usable in anionic polymerisation, said process consisting of reacting a first reagent formed of a dialkenyl benzene and a second reagent formed of secondary butyllithium, in an aliphatic or alicyclic hydrocarbon solvent, such that the ratio of the number of moles of first reagent to the number of moles of second reagent is substantially equal to 0.5,
**characterised in that** it consists of reacting said reagents in the presence of a diamine, so that the initiator obtained is essentially formed of a bi-adduct resulting from the addition of a molecule of secondary butyllithium to each of the two double bonds borne by said dialkenyl benzene.

2. A process for the preparation of a dilithiated initiator according to Claim 1, **characterised in that** it consists of introducing said diamine into a reaction mixture comprising said reagents.

3. A process for the preparation of a dilithiated initiator according to Claim 1 or 2, **characterised in that** it consists of adding said first reagent to said second reagent in a single go.

4. A process for the preparation of a dilithiated initiator according to one of Claims 1 to 3, **characterised in that** it consists of reacting said reagents in the presence of a quantity of diamine which varies from 0.5 to 1 lithium equivalent.

5. A process for the preparation of a dilithiated initiator according to Claim 4, **characterised in that** it consists of reacting said reagents in the presence of a quantity of diamine which is substantially equal to 1 lithium equivalent.

6. A process for the preparation of a dilithiated initiator according to one of Claims 1 to 5, **characterised in that** it consists of using, as diamine, a diamine belonging to the group consisting of tetramethylethylenediamine and tetraethylethylenediamine.

7. A process for the preparation of a dilithiated initiator according to Claim 6, **characterised in that** it consists of reacting said reagents in the presence of tetramethylethylenediamine.

8. A process for the preparation of a dilithiated initiator according to Claim 7, **characterised in that** it consists of reacting said reagents in the presence of tetramethylethylenediamine at a temperature which varies from -20°C to 50°C.

9. A process for the preparation of a dilithiated initiator according to Claim 6, **characterised in that** it consists of reacting said reagents in the presence of tetraethylethylenediamine.

10. A process for the preparation of a dilithiated initiator according to Claims 5 and 9, **characterised in that** it consists of reacting said reagents in the presence of tetraethylethylenediamine at a temperature which varies from -20°C to 50°C.

## Patentansprüche

1. Verfahren zur Herstellung eines dilithiierten Initiators, der bei der anionischen Polymerisation verwendbar ist, wobei das Verfahren darin besteht, in einem aliphatischen oder alicyclischen Lösungsmittel auf Kohlenwasserstoffbasis einen ersten Reaktanten, der aus einem Dialkenylbenzol besteht, und einen zweiten Reaktanten, der aus sekundärem Butyllithium besteht, so umzusetzen, dass das Verhältnis der Molzahl des ersten Reaktanten und der Molzahl des zweiten Reaktanten in etwa 0,5 beträgt,
**dadurch gekennzeichnet, dass** es darin besteht, die Reaktanten in Gegenwart eines Diamins umzusetzen, damit der erhaltene Initiator im Wesentlichen aus einem Bi-addukt besteht, das durch Addition eines sekundären Butyllithiummoleküls an jeder der beiden Doppelbindungen an dem Dialkenylbenzol gebildet wird.

2. Verfahren zur Herstellung eines dilithiierten Initiators nach Anspruch 1, **dadurch gekennzeichnet, dass** es darin besteht, das Diamin in ein Reaktionsmedium einzubringen, das die Reaktanten enthält.

3. Verfahren zur Herstellung eines dilithiierten Initiators nach Anspruch 1 oder 2, **dadurch gekennzeichnet, dass** es darin besteht, den ersten Reaktanten in einer Portion zu dem zweiten Reaktanten zu geben.

4. Verfahren zur Herstellung eines dilithiierten Initiators nach einem der Ansprüche 1 bis 3, **dadurch gekennzeichnet, dass** es darin besteht, die Reaktanten in Gegenwart einer Diaminmenge umzusetzen, die im Bereich von 0,5 bis 1 Äquivalent Lithium liegt.

5. Verfahren zur Herstellung eines dilithiierten Initiators nach Anspruch 4, **dadurch gekennzeichnet, dass** es darin besteht, die Reaktanten in Gegenwart einer Diaminmenge umzusetzen, die in etwa 1 Äquivalent Lithium beträgt.

6. Verfahren zur Herstellung eines dilithiierten Initiators nach einem der Ansprüche 1 bis 5, **dadurch gekennzeichnet, dass** es darin besteht, als Diamin ein Diamin aus der Gruppe zu verwenden, die aus Tetramethylethylendiamin und Tetraethylethylendiamin besteht.

7. Verfahren zur Herstellung eines dilithiierten Initiators nach Anspruch 6, **dadurch gekennzeichnet, dass** es darin besteht, die Reaktanten in Gegenwart von Tetramethylethylendiamin umzusetzen.

8. Verfahren zur Herstellung eines dilithiierten Initiators nach Anspruch 7, **dadurch gekennzeichnet, dass** es darin besteht, die Reaktanten in Gegenwart von Tetramethylethylendiamin bei einer Temperatur von -20 bis 50 °C umzusetzen.

9. Verfahren zur Herstellung eines dilithiierten Initiators nach Anspruch 6, **dadurch gekennzeichnet, dass** es darin besteht, die Reaktanten in Gegenwart von Tetraethylethylendiamin umzusetzen.

10. Verfahren zur Herstellung eines dilithiierten Initiators nach den Ansprüchen 5 und 9, **dadurch gekennzeichnet, dass** es darin besteht, die Reaktanten in Gegenwart von Tetraethylethylendiamin bei einer Temperatur von -20 bis 50°C umzusetzen.
